# EUROPÄISCHE PATENTSCHRIFT

(11) **EP 1 526 766 B1**
(45) Veröffentlichungstag und Bekanntmachung des Hinweises auf die Patenterteilung: **03.05.2006**
(21) Anmeldenummer: 03792162.4
(22) Anmeldetag: 25.06.2003
(51) Int. Cl.: A01C 7/20, A01C 7/04

(54) **SÄMASCHINE**
SEEDING MACHINE
SEMOIR

(30) Priorität: 08.08.2002 US 214957; 08.08.2002 US 214970
(43) Veröffentlichungstag der Anmeldung: 04.05.2005
(73) Patentinhaber: DEERE & COMPANY, Moline, Illinois 61265-8098 (US)
(72) Erfinder: MEYER, Bradley, John, Davenport, IA 52806 (US); MARIMAN, Nathan, Albert, Geneseo, IL 61254 (US)
(74) Vertreter: Holst, Sönke
(86) Internationale Anmeldenummer: PCT/EP2003/006675
(87) Internationale Veröffentlichungsnummer: WO 2004/017712

(56) Entgegenhaltungen:
- FR-A- 2 591 416
- GB-A- 593 983
- US-A- 3 804 036
- US-A- 4 296 695
- US-A- 4 503 786
- US-A- 4 514 114
- US-A- 4 705 220
- US-A- 5 161 473

## Beschreibung

### Technisches Gebiet

Die Erfindung betrifft eine Sämaschine für ein landwirtschaftliches Produkt. Die Sämaschine enthält einen Hauptbehälter, welcher eine Düsenanordnung enthält, in die das im Hauptbehälter enthaltene Produkt geleitet wird, wobei die Düsenanordnung eine strömungsaufwärtsseitige Seitenwand und eine strömungsabwärtsseitige Seitenwand aufweist. Des Weiteren enthält die Sämaschine mehrere Ausbringeinheiten mit einer Produktdosiervorrichtung und einer Ausbringvorrichtung zum Ausbringen des Produktes auf das Feld, wobei jede Produktdosiervorrichtung über eine Produktversorgungsleitung mit der strömungsabwärtsseitigen Seitenwand der Düsenanordnung verbunden ist. Ferner enthält die Sämaschine eine durch mehrere Luftversorgungsleitungen pneumatisch mit den strömungsaufwärtsseitigen Seitenwänden der Düsenanordnung verbundene Luftpumpe, wobei die Luftpumpe Druckluft generiert, die in die Luftversorgungsleitungen geleitet wird. Die Anzahl der Luftversorgungsleitungen entspricht der Anzahl der Ausbringeinheiten. Jede Luftversorgungsleitung enthält einen mit der Düsenanordnung verbundenen Lufteingangskanal, gegenüberliegend zu dem Produktausgangskanal der Produktversorgungsleitung. Das in der Düsenanordnung befindliche Produkt wird durch den Luftstrom aufgenommen, wenn der Luftstrom aus dem Lufteingangskanal der entsprechenden Luftversorgungsleitung durch die Düsenanordnung in den entsprechenden Produktausgangskanal der Produktversorgungsleitung strömt, wobei die Produktversorgungsleitung das Produkt zu der entsprechenden Produktdosiervorrichtung leitet.

### Stand der Technik

Pneumatisch bedarfsgesteuerte Produktabgabesysteme werden bei landwirtschaftlichen Sämaschinen zur automatischen Beförderung von Saatgut aus einem Hauptbehälter zu mehreren einzelnen Pflanzeinheiten eingesetzt. Jede der einzelnen Pflanzeinheiten enthält einen Saatguthilfsbehälter zur Aufnahme von Saatgut, eine Saatgutdosiervorrichtung zur Dosierung des Saatguts aus dem Saatguthilfsbehälter und einen Furchenöffner zur Ausbildung einer Pflanzfurche in die das dosierte Saatgut abgelegt wird. Zur Erzeugung von Druckluft wird ein Gebläse eingesetzt. Durch die Druckluft wird ein Luftstrom generiert, durch den das Saatgut in die Pflanzeinheiten befördert wird. Diese Systeme füllen die Saatguthilfsbehälter automatisch bei Bedarf auf.

Druckluftbetriebene Sämaschinen dosieren Saatgut strömungsaufwärtsseitig vom transportierenden Luftstrom. Weil dabei die Dosiervorrichtung weit von der Ausbringvorrichtung entfernt liegt, wird das auf das Feld abgelegte Saatgut nicht so genau dosiert, wie wenn die Dosiervorrichtung in unmittelbarer Nähe zur Ausbringvorrichtung positioniert ist.

Die im Handel erhältlichen Sämaschinen benötigen in der Regel ein großes Gebläse zur Erzeugung des Luftstroms. Das große. Gebläse wird wegen der innerhalb des pneumatischen Systems vorhandenen Druckverluste benötigt, die durch abrupte Richtungswechsel des Luftstromes im Hauptbehälter verursacht werden. Eine derartige Maschine wird.beispielsweise in der US 5 161 473 A offenbart. Hier wird durch mit einem Hauptbehälter in Wechselwirkung tretender Druckluft eine Aufwirbelung von Saatgut erzielt, das durch die Wirbelbewegung in eine Saatgutzuführleitung befördert wird: Dies erfordert ein hohes Maß an Drucklufterzeugung. Des Weiteren können durch Wirbelerzeugungen im Saatgut Verstopfungen in der Saatgutzuführleitung und/oder in der Luftzuführleitung hervorgerufen werden.

Eine andersartige Sämaschine wird in der FR 2 591 416 A offenbart. Hier wird mittels Druckluft Saatgut aus einem Saatguthauptbehälter herausbefördert, indem mittels trichterförmigen Düsenanordnungen das Saatgut direkt in eine mit dem Luftstrom beaufschlagte Saatgutzuführleitung geleitet wird. Nachteilig wirkt sich aus, dass das Saatgut direkt in die Saatgutzuführleitung fällt und diese verstopfen kann. Des Weiteren ist auch hier ein hohes Maß an Drucklufterzeugung notwenig.

### Aufgabe der Erfindung

Die der Erfindung zu Grunde liegende Aufgabe wird darin gesehen, eine Sämaschine der eingangs genannten Art anzugeben, durch welches die vorgenannten Probleme überwunden werden.

### Beschreibung der Erfindung

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst eine Sämaschine der eingangs genannten Art eine Düsenanordnung, die mit einer der Anzahl der Ausbringeinheiten entsprechenden Zahl von Blenden versehen ist, wobei sich die Blenden zwischen und oberhalb von den Lufteingangskanälen der Luftversorgungsleitungen und den entsprechenden Produktausgangskanälen der Produktversorgungsleitungen erstrecken. Dadurch, dass die Lufteingangskanäle der Luftversorgungsleitungen gegenüberliegend zu den Produktausgangskanälen der Produktversorgungsleitungen angeordnet sind, ist der durch den Hauptbehälter strömende Luftstrom keinen abrupten Richtungswechseln ausgesetzt. Damit können Druckverluste minimiert werden.

Die benachbarten Kombinationen aus Lufteingangskanal und Produktausgangskanal sind in Querrichtung zueinander beabstandet angeordnet, so dass Saatgut oder Nichtsaatgut an beiden Seiten der Blenden vorbei gelangen und sich unter den Blenden anhäufen kann. Ein durch den Lufteingangskanal in den Gutausgangskanal strömender Luftstrom nimmt Gut aus der Anhäufung auf.

Die Luftpumpe erzeugt die zur Beförderung des Produktes benötigte Druckluft, welche an die Luftversorgungsleitungen geführt wird. Die Luftversorgungsleitungen sind mit Lufteingangskanälen verbunden, die am Boden des Hauptbehälters ausgebildet sind. Gegenüber den Lufteingangskanälen sind entsprechende Produktausgangskanäle ausgebildet, die den Luftstrom mit dem von dem Luftstrom aufgenommenen Produkt aufnehmen.

Die Produktausgangskanäle sind mit Produktversorgungsleitungen verbunden. Die Produktversorgungsleitungen sind wiederum mit den auf den Ausbringeinheiten enthaltenden Hilfsbehältern verbunden.

In einer weiteren bevorzugten Ausgestaltung der Erfindung ist die Düsenanordnung mit einer Mehrzahl von Blenden ausgestattet, wobei die Anzahl der Blenden der Anzahl der Ausbringeinheiten entspricht. Die Blenden erstrecken sich zwischen und oberhalb von den Lufteingangskanälen der Luftversorgungsleitungen und den entsprechenden Produktausgangskanälen der Produktversorgungsleitungen.

Vorzugsweise sind die Lufteingangskanäle und die Produktausgangskanäle derart angeordnet, dass der Luftstrom aus der Luftversorgungsleitung unterhalb der Blenden entlangströmt.

Des Weiteren sind die über den Lufteingangskanälen und Produktausgangskanälen angeordneten Blenden vorzugsweise nach oben hin spitz zulaufend ausgebildet, so dass das Produkt auf den Boden der Düsenanordnung fällt und sich unter der Düsenanordnung anhäuft bzw. sammelt. Ferner sind zwischen den benachbarten Blenden Freiräume ausgeformt, derart, dass das im Hauptbehälter befindliche Produkt durch Schwerkraft in die Düsenanordnung gelangt und das Produkt aus dem Hauptbehälter in die Produktanhäufung bzw. Produktansammlung nachfließen kann.

In einer bevorzugten Ausgestaltung der Erfindung sind die Produktausgangskanäle der Produktversorgungsleitungen relativ zum Boden der Düsenanordnung aufwärtsgerichtet angeordnet. Des Weiteren sind die Lufteingangskanäle der Luftversorgungsleitungen relativ zum Boden der Düsenanordnung abwärtsgerichtet angeordnet. Ferner ist der Boden der Düsenanordnung konkavförmig ausgebildet und die strömungsaufwärtsseitigen und strömungsabwärtsseitigen Seitenwände laufen nach außen hin auseinander.

In einer besonders bevorzugten Ausgestaltung der Erfindung ist ein Luftstromverteiler enthalten, der stromaufwärts von der Luftversorgungsleitung pneumatisch mit der Luftpumpe verbunden ist, wobei jede der Luftversorgungsleitungen pneumatisch mit dem Luftstromverteiler verbunden ist. Vorzugsweise wird der Luftstromverteiler durch einen hohlförmigen Teil des den Hauptbehälter tragenden Rahmens ausgebildet und damit die Teilevielfalt der Sämaschine gering gehalten. Die von der Luftpumpe geförderte Druckluft gelangt über den Luftstromverteiler in gleichen Anteilen an die einzelnen Luftversorgungsleitungen und damit in gleichen Teilen über die Lufteingangskanäle in die Düsenanordnungen. Dadurch wird eine gleichmäßige Produktverteilung über die Produktausgangskanäle in die einzelnen Produktversorgungsleitungen erzielt.

In einer weiteren bevorzugten Ausgestaltung der Erfindung ist die Düsenanordnung mit einer Reinigungsklappe versehen, welche unterhalb der Lufteingangskanäle der Luftversorgungsleitungen und der Produktausgangskanäle der Produktversorgungsleitungen angeordnet ist. Durch Öffnen der Reinigungsklappe kann auf einfache Weise eine Entleerung bzw. Reinigung der Düsenanordnung von restlichen Produktbeständen erfolgen.

Jede Ausbringeinheit enthält vorzugsweise eine Pflanzeinheit, mit einer eine Saatgutdosiervorrichtung enthaltenden produktdosiervorrichtung und einer einen Furchenöffner enthaltenden Ausbringvorrichtung. Die erfindungsgemäße Sämaschine kann somit zur bedarfsgerechten Abgabe von Saatgut aus einem Hauptbehälter an einen auf der Pflanzeinheit befindlichen Saatguthilfsbehälter eingesetzt werden. Die Pflanzeinheit kann dabei einen Hilfsbehälter enthalten, der eine Saatgutdosiervorrichtung mit Saatgut speist bzw. versorgt. Die Saatgutdosiervorrichtung wiederum gibt Saatgut in dosierter Form über einen Furchenöffner in eine Pflanzfurche ab. Erfindungsgemäß können die Saatgutdosiervorrichtungen als Vakuumsaatgutdosiervorrichtung ausgebildet sein.

In einer besonders bevorzugten Ausgestaltung der Erfindung sind die Lufteingangskanäle der Luftversorgungsleitungen mit Einsätzen versehen, welche ein luftstromablenkendes Teil enthalten, das einen Teil des Luftstroms nach unten in Richtung des Bodens der Düsenanordnung ablenkt, um das sich auf dem Boden der Düsenanordnung befindliche Produkt aufzuwirbeln. Insbesondere wenn das Produkt größere Partikel aufweist, wie z. B. Mais und Sojabohnen, kann ein derartiger Einsatz in den Lufteingangskanal eingesetzt werden, so dass der nach unten abgelenkte Teil des Luftstroms auf die Produktanhäufung trifft und diese derart aufwirbelt, dass die Aufnahme des Produktes durch den in den Produktausgangskanal strömenden Luftstrom erleichtert wird.

In einer weiteren bevorzugten Ausgestaltung der Erfindung sind die Blenden mit einem Element versehen, welches einen abgrenzenden Boden enthält, um die dem zwischen den Lufteingangskanälen der Luftversorgungsleitungen und den Produktausgangskanälen der Produktversorgungsleitungen durchströmenden Luftstrom ausgesetzte Produktmenge zu begrenzen. Insbesondere wenn das Produkt kleinere Partikel aufweist, kann eine zu hohe Aufnahme des Produktes durch den Luftstrom, welcher aus den Lufteingangskanal in den Produktausgangskanal strömt, erfolgen. Vorzugsweise kann die Düsenanordnung dann mit einem Aufsteckelement versehen werden, welches an die Blenden aufgesteckt wird und den auf die Produktanhäufung einwirkenden Luftstrom begrenzt, indem ein Teil der Produktanhäufung abgedeckt wird. Dadurch wird die dem Luftstrom ausgesetzte Menge an Produkt begrenzt und somit eine begrenzte Produktaufnahme auch bei sehr kleinen und leichten Produktanteilen erzielt.

In einer anderen Ausgestaltung der Erfindung ist die Düsenanordnung mit einer Rührwerkvorrichtung versehen, die eine sich quer zu Düsenanordnung erstreckende Querstange enthält und mit mehreren sich radial erstreckenden Fingern versehen ist. Die Querstange rotiert alternierend hin und her über einen Winkel von vorzugsweise 180 Grad und wird über eine GetriebeMotor-Anordnung angetrieben. Dabei durchlaufen die sich radial erstreckenden Finger die Freiräume zwischen den einzelnen Blenden und lockern bzw. rühren das Produkt auf.

### Beschreibung der Zeichnung

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

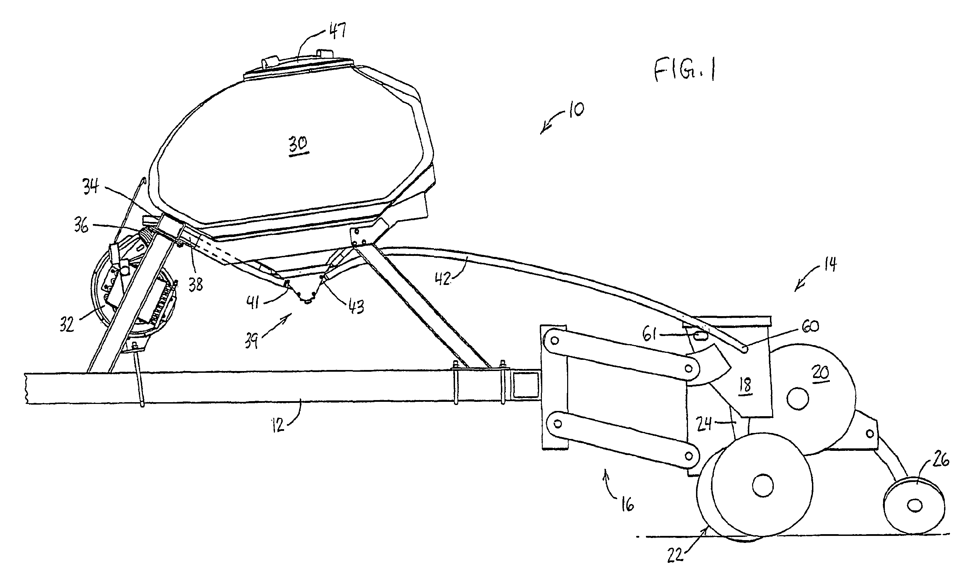

- Fig. 1: eine Seitenansicht einer erfindungsgemäßen landwirtschaftlichen Sämaschine,

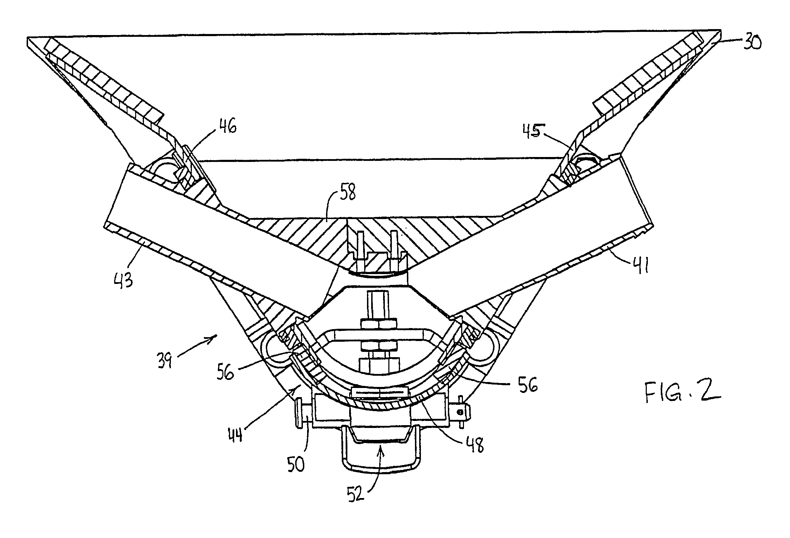

- Fig. 2: eine Seitenquerschnittsansicht einer Düsenanordnung der Sämaschine,

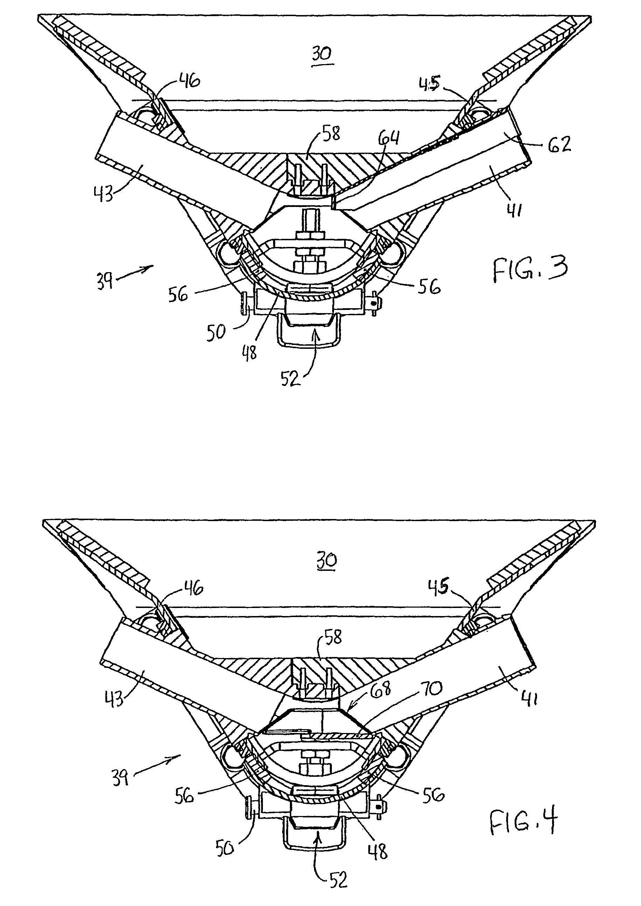

- Fig. 3: eine Seitenquerschnittsansicht einer Düsenanordnung der Sämaschine mit einem luftleitenden Einsatz,

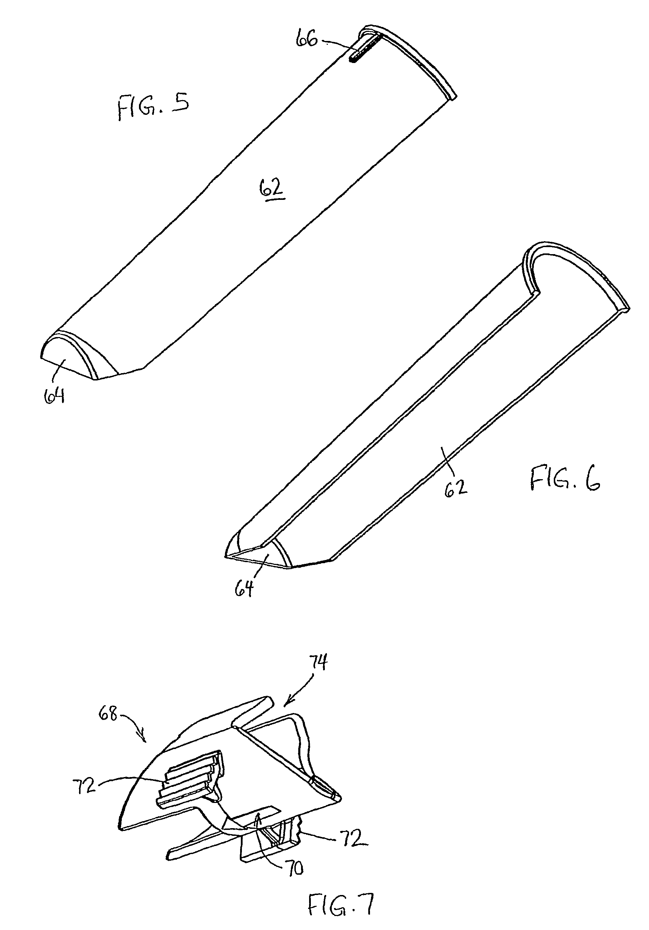

- Fig. 4: eine Seitenquerschnittsansicht einer Düsenanordnung der Sämaschine mit einem Produktaufnahmebegrenzungselement,
- Fig. 5: eine perspektivische Ansicht des luftablenkenden Einsatzes von der Oberseite,
- Fig. 6: eine perspektivische Ansicht des luftablenkenden Einsatzes von der Unterseite,
- Fig. 7: eine perspektivische Ansicht des Produktaufnahmebegrenzungselements von der Unterseite,

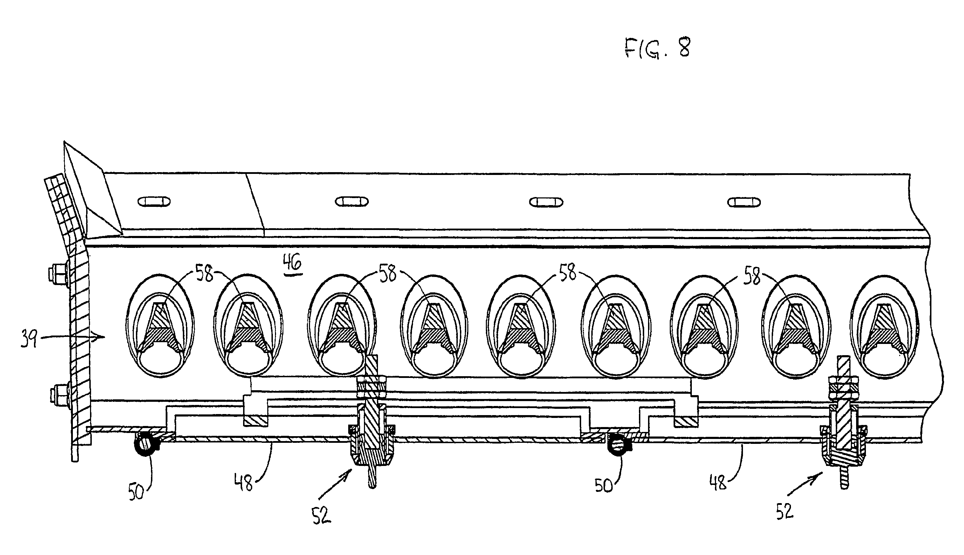

- Fig. 8: eine Vorderquerschnittsansicht der Düsenanordnung der Sämaschine,

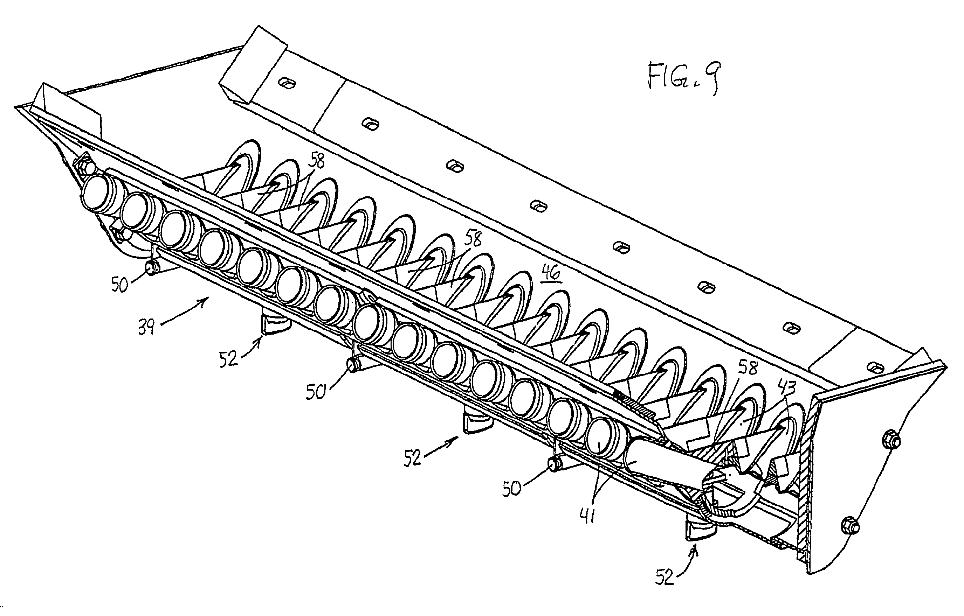

- Fig. 9: eine perspektivische Vorderansicht und Teilquerschnittsansicht der Düsenanordnung der Sämaschine,
- Fig. 10: eine perspektivische Vorderansicht der mit einer Rührwerkanordnung versehen Düsenanordnung und
- Fig. 11: eine Querschnittsansicht der mit einer Rührwerkanordnung versehen Düsenanordnung.

### Detaillierte Beschreibung zur Ausführung der Erfindung

Eine landwirtschaftliche Sämaschine 10 enthält einen Rahmen 12, auf dem mehrere einzelne Pflanzeinheiten 14 montiert sind. Die Pflanzeinheiten 14 sind über ein Parallelogrammgestänge 16 mit dem Rahmen 12 verbunden, so dass sich die einzelnen Pflanzeinheiten 14 relativ zum Rahmen 12 bis zu einem begrenzten Maße auf und nieder bewegen können. Jede der einzelnen Pflanzeinheiten 14 enthält einen Saatguthilfsbehälter 18 zur Aufnahme von Saatgut, eine Saatgutdosiervorrichtung 20 zur Dosierung des vom Saatguthilfsbehälter 18 aufgenommenen Saatguts und einen Furchenöffner 22 zur Ausbildung einer Saatfurche auf einem Feld zur Aufnahme des von der Saatgutdosiervorrichtung 20 dosierten Saatguts. Das Saatgut wird durch ein Saatrohr 24 von der Saatgutdosiervorrichtung 20 in die Pflanzfurche geleitet. Eine Verschließvorrichtung 26 dient zum Verschließen der das Saatgut enthaltenden Pflanzfurche. In einer bevorzugten Ausführungsform ist die Saatgutdosiervorrichtung 20 eine Vakuumsaatgutdosiervorrichtung, obwohl auch andere Arten von Saatgutdosiervorrichtungen, die mechanische Baugruppen oder Überdruck verwenden, verwendet werden könnten. Hierbei sollte erwähnt werden, dass die Erfindung auch zum Ausbringen von Nichtsaatgut auf dem Feld genutzt werden könnte. Sowohl für Saat- als auch für Nichtsaatgut, kann die Pflanzeinheit 14 als Ausbringeinheit mit einem Hilfsbehälter zur Aufnahme eines Guts, einer Dosiervorrichtung zur Dosierung des vom Hilfsbehälter aufgenommenen Guts und einer Ausbringvorrichtung zum Ausbringen des dosierten Guts auf das Feld angesehen werden. Beispielsweise könnten ein chemikalischer Trockendünger oder Pestizide in den Hilfsbehälter geleitet, durch die Dosiervorrichtung dosiert und durch die Ausbringvorrichtung auf das Feld aufgebracht werden.

Der Hauptrahmen 12 trägt einen Hauptbehälter 30 und eine Druckluftpumpe 32. Die Druckluftpumpe 32 wird durch einen Hydraulikmotor angetrieben, wobei auch andere Motoranordnungen, wie z. B. elektrische Motoren für den Antrieb der Luftpumpe 32 eingesetzt werden könnten. Die Luftpumpe 32 fördert Druckluft durch einen Hauptluftschlauch 36 in einen Verteiler 34. Der Verteiler 34 ist aus einem hohlen, geschlossenen, rohrförmigen Träger des Rahmens 12 geformt. Der Verteiler 34 ist entsprechend der Anzahl der am Rahmen 12 enthaltenden Pflanzeinheiten 14 mit mehreren Verteilerauslassöffnungen versehen. Einzelne Luftversorgungsleitungen 38 erstrecken sich von den Verteilerauslassöffnungen und leiten Druckluft vom Verteiler 34 in die Strömungseingangsseite der Düsenanordnung 39. Die Düsenanordnung 39 ist auf dem Boden des Hauptbehälters 30 angeordnet. Durch die Schwerkraft gelangt das im Hauptbehälter 30 befindliche Gut in die Düsenanordnung 39. Die Düsenanordnung 39 ist mit einer Anzahl von Lufteingangskanälen 41 versehen, die der Anzahl von Luftversorgungsleitungen 38 entspricht. Die Lufteingangskanäle 41 sind quer entlang der Strömungseingangsseite zueinander beabstandet angeordnet. Die Strömungsausgangsseite der Düsenanordnung 39 ist mit einer Anzahl von Gutausgangskanälen 43 versehen, die der Anzahl der Luftversorgungsleitungen 38 entspricht. Die Gutausgangskanäle 43 sind ebenfalls quer entlang der Strömungsausgangsseite der Düsenanordnung 39 zueinander beabstandet angeordnet. Die Gutausgangskanäle 43 liegen gegenüber den Lufteingangskanälen 41. Jeder Lufteingangskanal 41 ist fluchtend zu einem entsprechenden Gutausgangskanal 43 ausgerichtet. Gutversorgungsschläuche 42 erstrecken sich von den Gutausgangskanälen 43 zu den einzelnen Hilfsbehältern 18 und leiten das im Luftstrom mitgeführte Gut zu den Hilfsbehältern 18.

Die Düsenanordnung 39 ist mit einem konkavförmigen Boden 44 ausgebildet, welcher nach außen auseinanderlaufende Seitenwände 45, 46 enthält. Das Gut in Form von Saatgut oder Nichtsaatgut wird in den Hauptbehälter 30 durch einen Deckel 47 eingeführt. Bereiche der Düsenanordnung 39 können geöffnet werden und stellen eine Reinigungsöffnung 48 bereit. Die Reinigungsöffnung 48 ist durch einen Scharnierbolzen 50 schwenkbar mit der Düsenanordnung 39 verbunden. Die Reinigungsöffnung wird durch eine Verriegelung 52, welche mit den inneren Seitenwände 45, 46 des Hauptbehälters 30 in Verbindung steht, arretiert. Um die Reinigungsöffnung 48 zu öffnen, wird die Verriegelung 52 um 90° geschwenkt, so dass die Schenkel der Verriegelung 52 nicht länger mit den inneren Seitenwänden 45, 46 in Kontakt stehen. Die Reinigungsklappe 48 wird dann über den Scharnierbolzen 50 verschwenkt, so dass sie unterhalb des Scharnierbolzens 50 hängt. Zwischen der Reinigungsklappe 48 und der außenliegenden Oberfläche der nach außen auseinanderlaufenden Seitenwände 45, 46 ist, zur Abdichtung des Hauptbehälters 30 bei geschlossener Reinigungsklappe 48, eine elastische Gummischaumdichtung 56 angeordnet.

Jeder Lufteingangskanal 41 und dazugehöriger Gutausgangskanal 43 ist aus zwei Kunststoffteilen ausgebildet. Die zwei Kunststoffteile sind mittels eingebauter Stecker, die am einen Teil ausgebildet sind, und Aufnahmeöffnungen, die am anderen Teil ausgebildet sind, zusammengesteckt. Der Lufteingangskanal 41 ist relativ zum konkavförmigen Boden 44 abwärtsgeneigt angeordnet und der Gutausgangskanal 43 ist entsprechend relativ zum konkavförmigen Boden 44 aufwärtsgeneigt angeordnet. Zwischen dem Lufteingangskanal 41 und dem Gutausgangskanal 43 erstreckt sich eine eingebaute Blende 58. Die Blende 58 läuft spitz zu und ist über dem Luftstrom, der durch den Lufteingangskanal 41 und dem Gutausgangskanal 43 verläuft, angeordnet. Der abwärtsgeneigte Lufteingangskanal 41 verhindert, dass Gut zurück in die Luftversorgungsleitung 38 gelangt, wohingegen der aufwärtsgerichtete Gutausgangskanal 43 verhindert, dass Gut in den Gutversorgungsschlauch 42 strömt und diesen verstopft.

Die benachbarten Kombinationen aus Lufteingangskanal 41 und Gutausgangskanal 43 sind in Querrichtung zueinander beabstandet angeordnet, so dass Saatgut oder Nichtsaatgut an beiden Seiten der Blenden 58 vorbei gelangen und sich unter den Blenden 58 anhäufen kann. Ein durch den Lufteingangskanal 41 in den Gutausgangskanal 43 strömender Luftstrom nimmt Gut aus der Anhäufung auf und fördert es durch den Gutversorgungsschlauch 42 in den Saatguthilfsbehälter 18. Die Förderung von Gut aus dem Hauptbehälter 30 in die Saatguthilfsbehälter 18 geschieht automatisch sobald Gut in den Saatguthilfsbehältern 18 benötigt wird. Sobald ein einzelner Saatguthilfsbehälter 18 sich mit Gut füllt, bedeckt sich der Guteinlasskanal 60 des Saatguthilfsbehälters 18 mit Gut, wodurch der Luftstrom blockiert und abgeschwächt wird, so dass der Luftstrom kein Gut im Hauptbehälter 30 mehr aufnimmt und in den Saatguthilfsbehälter 18 fördert.

Im Gegensatz dazu ist der Guteinlasskanal 60 des Saatguthilfsbehälters 18 freigelegt, wenn das Gut durch die Saatgutdosiervorrichtung 20 aufgebraucht wurde, so dass der Luftstrom erneut Gut zur Förderung in den Saatguthilfsbehälter 18 aufnimmt. Auf diese Weise werden die Saatguthilfsbehälter 18 stets und automatisch mit Gut versorgt. Die Seitenwände der Saatguthilfsbehälter 18 sind zum Abbau des Luftdrucks im Saatguthilfsbehälter 18 mit Belüftungsöffnungen 61 versehen. Die Belüftungsöffnungen 61 können auch auf der Abdeckung der Saatguthilfsbehälter 18 angeordnet sein, solange sich die Belüftungsöffnungen 61 oberhalb der entsprechenden Guteinlasskanäle 60 befinden.

In einigen Fällen, in denen das Gut größere Partikel enthält, wie z. B. große Samenkörner (Mais und Sojabohnen), ist es für den Luftstrom schwierig, diese aufzunehmen. Um größere Samenkörner aufzunehmen, kann der Lufteingangskanal 41 mit einem Einsatz 62 versehen sein, welcher ein luftstromablenkendes Teil 64 enthält, durch das ein Teil des Luftstroms nach unten abgelenkt wird, um die Samenkörner in der Anhäufung aufzuwirbeln, so dass die Samenkörner von dem in den Gutausgangskanal 43 strömenden Luftstrom eingefangen werden. Der Einsatz 62 ist mit einem Passsteg 66 versehen, der in eine im Lufteingangskanal 41 ausgebildete Ausspaarung eingreift, um eine korrekte Positionierung des Einsatzes 62 und des luftstromablenkenden Teils zu gewährleisten.

In anderen Fällen kann das Saatgut oder Nichtsaatgut zu leicht sein und auch schon durch einen leichten Luftstrom sofort mitgenommen werden. Um dieses Problem zu lösen, können die Blenden 58 mit einem Klippelement 68 (Produktaufnahmebegrenzungselement) versehen werden. Das Klippelement 68 kann an die Blende 58 aufgesteckt werden. Das Klippelement 68 enthält einen abgrenzenden Boden 70, mit dem die dem Luftstrom ausgesetzte Menge an Gut begrenzt wird. Das Klippelement 68 ist aus Kunststoff gefertigt und mit Spanngriffen 72 versehen. Durch Zusammendrücken der Spanngriffe 72 wird ein oberer Spalt 74 geöffnet, so dass das Klippelement 68 auf die Blende 58 aufgesteckt werden kann.

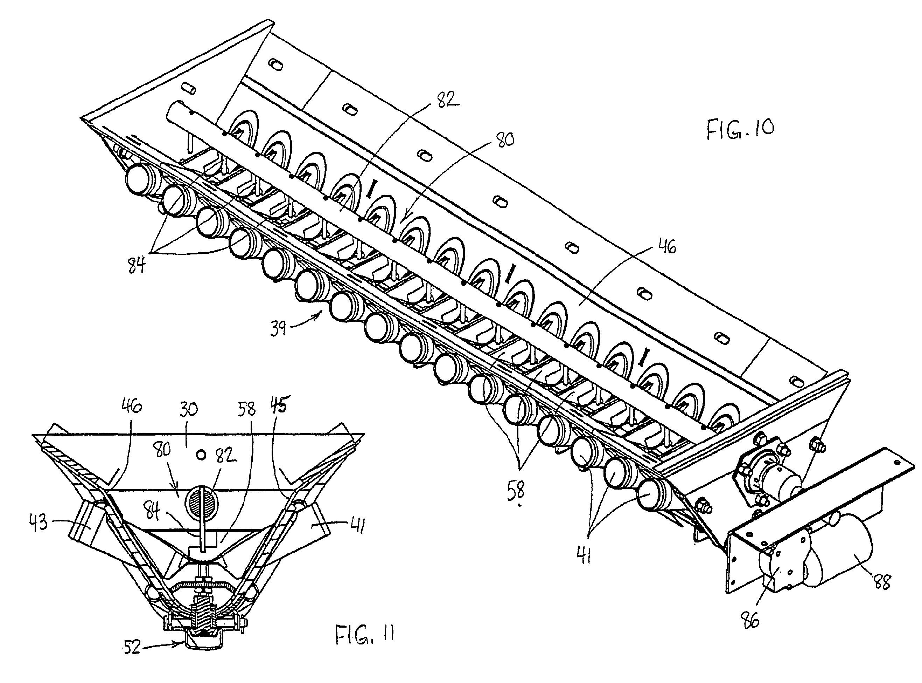

In einer alternativen Ausführungsform kann der für die großen Samenkörner vorgesehene Einsatz 62 durch eine Rührwerkanordnung 80 ausgetauscht werden. Die Rührwerkanordnung 80 enthält eine Querstange 82 die sich quer über die Düsenanordnung 39 erstreckt. Die Querstange 82 ist mit mehreren sich radial erstreckenden Fingern 84 versehen. Wie in Fig. 10 gezeigt ist, sind die Finger in Querrichtung zueinander ausgerichtet.

Die Querstange 82 wird durch ein von einem Motor 88 angetriebenes Getriebe 86 hin und her verdreht. In der unteren Totpunktstellung erstrecken sich die Finger 84 zwischen den einzelnen Düsen, welche durch die zueinander ausgerichteten Lufteingangskanäle 41 und Gutausgangskanäle 43 gebildet werden. Auf diese Weise überstreichen die Finger 84 den Bereich zwischen den Düsen. Die Getriebe/Motor-Anordnung 86, 88 verdreht die Querstange 82 einundfünfzigeinhalb Grad in beide Richtungen ausgehend von der unteren Totpunktstellung, wie sie in Fig. 11 dargestellt ist. Damit durchlaufen die Finger einen Winkel von einhundertdrei Grad.

## Patentansprüche

1. Sämaschine, mit:
- einem Hauptbehälter (30), welcher eine Düsenanordnung (39) enthält, in die das im Hauptbehälter (30) enthaltene Produkt geleitet wird, wobei die Düsenanordnung (39) eine strömungsaufwärtsseitige Seitenwand (45) und eine strömungsabwärtsseitige Seitenwand (46) aufweist,
- mehreren Ausbringeinheiten (14) mit einer Produktdosiervorrichtung (20) und einer Ausbringvorrichtung zum Ausbringen des Produktes auf das Feld, wobei jede Produktdosiervorrichtung (20) über eine Produktversorgungsleitung (42) mit der strömungsabwärtsseitigen Seitenwand (46) der Düsenanordnung (39) verbunden ist und
- einer durch mehrere Luftversorgungsleitungen (38) pneumatisch mit der strömungsaufwärtsseitigen Seitenwand (45) der Düsenanordnung (39) verbundenen Luftpumpe (32),
wobei die Luftpumpe (32) Druckluft generiert, die in die Luftversorgungsleitungen (38) geleitet wird, wobei die Anzahl der Luftversorgungsleitungen (38) der Anzahl der Ausbringeinheiten (14) entspricht und jede Luftversorgungsleitung (38) einen mit der Düsenanordnung (39) verbundenen Lufteingangskanal (41) gegenüberliegend zu dem Produktausgangskanal (43) der Produktversorgungsleitung (42) enthält, so dass das in der Düsenanordnung (39) befindliche Produkt durch den Luftstrom aufgenommen wird, wenn der Luftstrom aus dem Lufteingangskanal (41) der entsprechenden Luftversorgungsleitung (38) durch die Düsenanordnung (39) in den entsprechenden Produktausgangskanal (43) der Produktversorgungsleitung (42) strömt und wobei die Produktversorgungsleitung (42) das Produkt zu der entsprechenden Produktdosiervorrichtung (20) leitet, **dadurch gekennzeichnet, dass** die Düsenanordnung (39) mit einer der Anzahl der Ausbringeinheiten (14) entsprechenden Zahl von Blenden (58) versehen ist, wobei sich die Blenden (58) zwischen und oberhalb von den Lufteingangskanälen (41) der Luftversorgungsleitungen (38) und den entsprechenden Produktausgangskanälen (43) der Produktversorgungsleitungen (42) erstrecken.

2. Sämaschine nach einem der vorhergehenden Ansprüche, **dadurch gekennzeichnet, dass** der Luftstrom aus der Luftversorgungsleitung (38) unterhalb der Blenden (58) entlangströmt.

3. Sämaschine nach einem der vorhergehenden Ansprüche, **dadurch gekennzeichnet, dass** jede Blende (58) nach oben hin spitz zulaufend ausgebildet ist und zwischen den benachbarten Blenden (58) Freiräume ausgeformt sind, so dass das Produkt auf einen Boden (44) der Düsenanordnung (39) fällt.

4. Sämaschine nach einem der vorhergehenden Ansprüche, **dadurch gekennzeichnet, dass** die Produktausgangskanäle (43) der Produktversorgungsleitungen (42) relativ zum Boden (44) der Düsenanordnung (39) aufwärtsgerichtet angeordnet sind.

5. Sämaschine nach einem der vorhergehenden Ansprüche, **dadurch gekennzeichnet, dass** die Lufteingangskanäle (41) der Luftversorgungsleitungen (38) relativ zum Boden (44) der Düsenanordnung (39) abwärtsgerichtet angeordnet sind.

6. Sämaschine nach einem der vorhergehenden Ansprüche, **dadurch gekennzeichnet, dass** der Boden (44) der Düsenanordnung (39) konkavförmig ausgebildet ist und die strömungsaufwärtsseitigen und strömungsabwärtsseitigen Seitenwände (45, 46) nach außen hin auseinanderlaufen.

7. Sämaschine nach einem der vorhergehenden Ansprüche, **dadurch gekennzeichnet, dass** jede Ausbringeinheit (14) mit einem zwischen dem Produkteingangskanal (60) und der Produktdosiervorrichtung (20) positionierten Hilfsbehälter (18) versehen ist.

8. Sämaschine nach einem der vorhergehenden Ansprüche, **dadurch gekennzeichnet, dass** ein Luftstromverteiler (34) enthalten ist, der stromaufwärts von der Luftversorgungsleitung (38) pneumatisch mit der Luftpumpe (32) verbunden ist, wobei jede der Luftversorgungsleitungen (38) pneumatisch mit dem Luftstromverteiler (34) verbunden ist.

9. Sämaschine nach Anspruch 8, **dadurch gekennzeichnet, dass** der Luftstromverteiler (34) durch einen hohlförmigen Teil eines den Hauptbehälter (30) tragenden Rahmens (12) ausgebildet ist.

10. Sämaschine nach einem der vorhergehenden Ansprüche, **dadurch gekennzeichnet, dass** die Düsenanordnung (39) mit einer Reinigungsklappe (48) versehen ist, welche unterhalb der Lufteingangskanäle (41) der Luftversorgungsleitungen (38) und der Produktausgangskanäle (43) der Produktversorgungsleitungen (42) angeordnet ist.

11. Sämaschine nach einem der vorhergehenden Ansprüche, **dadurch gekennzeichnet, dass** die Lufteingangskanäle (41) der Luftversorgungsleitungen (38) mit Einsätzen (62) versehen sind, welche ein luftstromablenkendes Teil (64) enthalten, das einen Teil des Luftstroms nach unten in Richtung des Bodens (44) der Düsenanordnung (39) ablenkt, um das sich auf dem Boden (44) der Düsenanordnung (39) befindliche Produkt aufzuwirbeln.

12. Sämaschine nach einem der vorhergehenden Ansprüche, **dadurch gekennzeichnet, dass** die Blenden (58) mit einem Element (68) versehen sind, welches einen abgrenzenden Boden (70) enthält, um die dem zwischen den Lufteingangskanälen (41) der Luftversorgungsleitungen (38) und den Produktausgangskanälen (43) der Produktversorgungsleitungen (42) durchströmenden Luftstrom ausgesetzte Produktmenge zu begrenzen.

13. Sämaschine nach Anspruch 12, **dadurch gekennzeichnet, dass** das Element (68) ein Ansteckelement in Form eines Klippelements ist.

14. Sämaschine nach einem der vorhergehenden Ansprüche, **dadurch gekennzeichnet, dass** in der Düsenanordnung (39) eine Rührwerkanordnung (80) enthalten ist, um in der Düsenanordnung (39) vorhandenes Gut aufzurühren.

15. Sämaschine nach Anspruch 14, **dadurch gekennzeichnet, dass** die Rührwerkanordnung (80) mit mehreren Fingern (84) versehen ist, welche sich in die zwischen den benachbarten Blenden (58) ausgebildeten Freiräume erstrecken.

16. Sämaschine nach Anspruch 14 oder 15, **dadurch gekennzeichnet, dass** die Rührwerkanordnung (80) eine über den Blenden (58) angeordnete Querstange (82) enthält, wobei die Querstange (82) mehrere Finger (84) enthält, welche sich ausgehend von der sich quer erstreckenden Stange (82) radial nach außen erstrecken.

17. Sämaschine nach Anspruch 15 oder 16, **dadurch gekennzeichnet, dass** die Finger (84) auf der sich quer erstreckenden Stange (82) in Querrichtung zueinander ausgerichtet sind.

18. Sämaschine nach einem der Ansprüche 15 bis 17, **dadurch gekennzeichnet, dass** die Querstange (82) hin und her verdrehbar ist, so dass die Finger (84) das in der Düsenanordnung (39) vorhandene Produkt aufrühren.

19. Sämaschine nach einem der Ansprüche 14 bis 18, **dadurch gekennzeichnet, dass** die Querstange (82) entlang einem Kreisbogen von einhundertdrei Grad (103°) hin und her verdrehbar ist.

20. Sämaschine nach Anspruch 19, **dadurch gekennzeichnet, dass** die Mitte des einen Winkel von einhundertunddrei Grad aufweisenden Kreisbogens die untere Totpunktstellung zur Düsenanordnung (39) darstellt.

## Claims

1. Seeding machine with:
• a main hopper (30), which includes a nozzle assembly (39), into which the product contained in the main hopper (30) is directed, wherein the nozzle assembly (39) has an upstream side wall (45) and a downstream side wall (46),
• several planting units (14) with a product metering device (20) and an applicator for applying the product to the field, wherein each product metering device (20) is connected via a product supply tube (42) to the downstream side wall (46) of the nozzle assembly (39), and
• an air pump (32) pneumatically connected through several air supply hoses (38) to the upstream side wall (45) of the nozzle assembly (39)
wherein the air pump (32) generates pressurised air, which is directed into the air supply hoses (38), wherein the number of air supply hoses (38) corresponds to the number of planting units (14) and each air supply hose (38) contains an air inlet (41) connected to the nozzle assembly (39) and located opposite the product outlet (43) of the product supply tube (42), so that the product located in the nozzle assembly (39) is taken up by the air stream when the air stream flows out of the air inlet (41) of the corresponding air supply hose (38) through the nozzle assembly (39) into the corresponding product outlet (43) of the product supply tube (42), and wherein the product supply tube (42) directs the product to the corresponding product metering device (20), **characterised in that** the nozzle assembly (39) is provided with a number of baffles (58) corresponding to the number of planting units (14), wherein the baffles (58) extend between and above the air inlets (41) of the air supply hoses (38) and the corresponding product outlets (43) of the product supply tubes (42).

2. Seeding machine according to one of the preceding claims, **characterised in that** the air stream flows out of the air supply hose (38) beneath the baffles (58).

3. Seeding machine according to one of the preceding claims, **characterised in that** each baffle (58) is configured to taper upwards to a point and spaces are formed between the adjacent baffles (58) so that the product drops to a bottom (44) of the nozzle assembly (39).

4. Seeding machine according to one of the preceding claims, **characterised in that** the product outlets (43) of the product supply tubes (42) are directed upwards relative to the bottom (44) of the nozzle assembly (39).

5. Seeding machine according to one of the preceding claims, **characterised in that** the air inlets (41) of the air supply hoses (38) are directed downwards relative to the bottom (44) of the nozzle assembly (39).

6. Seeding machine according to one of the preceding claims, **characterised in that** the bottom (44) of the nozzle assembly (39) is concave and the upstream and downstream side walls (45, 46) diverge outwards from one another.

7. Seeding machine according to one of the preceding claims, **characterised in that** each planting unit (14) is provided with an auxiliary hopper (18) positioned between the product inlet (60) and the product metering device (20).

8. Seeding machine according to one of the preceding claims, **characterised in that** an air manifold (34) is included, which is pneumatically connected to the air pump (32) upstream of the air supply hose (38), wherein each of the air supply hoses (38) is pneumatically connected to the air manifold (34).

9. Seeding machine according to Claim 8, **characterised in that** the manifold (34) is configured by a hollow part of a frame (12) supporting the main hopper (30).

10. Seeding machine according to one of the preceding claims, **characterised in that** the nozzle assembly (39) is provided with a cleanout door (48), which is arranged below the air inlets (41) of the air supply hoses (3 8) and the product outlets (43) of the product supply tubes (42).

11. Seeding machine according to one of the preceding claims, **characterised in that** the air inlets (41) of the air supply hoses (38) are provided with inserts (62), which contain an air deflecting portion (64), which deflects a portion of the air stream down towards the bottom (44) of the nozzle assembly (39) to agitate the product located on the bottom (44) of the nozzle assembly (39).

12. Seeding machine according to one of the preceding claims, **characterised in that** the baffles (58) are provided with an element (68), which has an obstructing bottom (70) to limit the amount of product exposed to the air stream flowing between the air inlets (41) of the air supply hoses (38) and the product outlets (43) of the product supply tubes (42).

13. Seeding machine according to Claim 12, **characterised in that** the element (68) is an attachment element in the form of a clip-on element.

14. Seeding machine according to one of the preceding claims, **characterised in that** an agitator assembly (80) is contained in the nozzle assembly (39) to agitate product located in the nozzle assembly (39).

15. Seeding machine according to Claim 14, **characterised in that** the agitator assembly (80) is provided with several fingers (84), which extend into the spaces formed between the adjacent baffles (58).

16. Seeding machine according to Claim 14 or Claim 15, **characterised in that** the agitator assembly (80) includes a transverse rod (82) arranged above the baffles (58), wherein the transverse rod (82) comprises several fingers (84), which extend radially outwards from the transversely extending rod (82).

17. Seeding machine according to Claim 15 or 16, **characterised in that** the fingers (84) are aligned transversely to one another on the transversely extending rod (82).

18. Seeding machine according to one of Claims 15 to 17, **characterised in that** the transverse rod (82) can be rotated back and forth so that the fingers (84) agitate the product located in the nozzle assembly (39).

19. Seeding machine according to one of Claims 14 to 18, **characterised in that** the transverse rod (82) can be rotated back and forth along an arc of one hundred and three degrees (103°).

20. Seeding machine according to Claim 19, **characterised in that** the centre of the arc with an angle of one hundred and three degrees represents the bottom dead centre to the nozzle assembly (39).

## Revendications

1. Semoir, comportant
- une trémie principale (30), qui comporte un système de buses (39), dans lequel est acheminé le produit contenu dans la trémie principale (30), le système de buses (39) comportant une paroi latérale (45) du côté amont et une paroi latérale (46) du côté aval du fllux,
- plusieurs unités de distribution (14) munies d'un dispositif de dosage du produit (20) et d'un dispositif de distribution destiné à distribuer le produit sur le champ, chaque dispositif de dosage du produit (20) étant relié via une conduite d'alimentation en produit (42) avec la paroi latérale du côté aval (46) du système de buses (39),
- une pompe à air (32) reliée par voie pneumatique, via plusieurs conduites d'admission d'air (38), à la paroi latérale du côté amont (45) du système de buses (39),
la pompe à air (32) générant de l'air comprimé, qui est acheminé dans les conduites d'admission d'air (38), le nombre de conduites d'admission d'air (38) correspondant au nombre d'unités de distribution (14) et chaque conduite d'admission d'air (38) contenant un canal d'entrée d'air (41), qui est relié au système de buses (39) et qui est situé en regard du canal de sortie du produit (43) de la conduite d'alimentation en produit (42), de telle sorte que le produit contenu dans le système de buses (39) est reçu par le flux d'air lorsque le flux d'air afflue hors du canal d'entrée d'air (41) de la conduite d'admission d'air (38) correspondante à travers le système de buses (39) dans le canal de sortie de produit (43) de la conduite d'alimentation en produit (42) et la conduite d'alimentation en produit (42) achemine le produit vers le dispositif de dosage du produit (20) correspondant, **caractérisé en ce que** le système de buses (39) est muni d'obturateurs (58) dont le nombre correspond au nombre d'unités de distribution (14), les obturateurs (58) étant disposés entre et au-dessus des canaux d'entrée d'air (41) des conduites d'admission d'air (38) et des canaux de sortie de produit (43) des conduites d'alimentation en produit (42).

2. Semoir selon l'une quelconque des revendications précédentes, **caractérisé en ce que** le flux d'air sortant de la conduite d'admission d'air (38) circule en dessous des obturateurs (58).

3. Semoir selon l'une quelconque des revendications précédentes, **caractérisé en ce que** chaque obturateur (58) est réalisé en se terminant en pointe vers le haut, des espaces libres étant formés entre des obturateurs (58) voisins, de telle sorte que le produit tombe sur un fond (44) du système de buses (39).

4. Semoir selon l'une quelconque des revendications précédentes, **caractérisé en ce que** les canaux de sortie de produit (43) des conduites d'alimentation en produit (42) sont orientés vers le haut par rapport au fond (44) du système de buses (39).

5. Semoir selon l'une quelconque des revendications précédentes, **caractérisé en ce que** les canaux d'entrée d'air (41) des conduites d'admission d'air (38) sont orientés vers le bas par rapport au fond (44) du système de buses (39).

6. Semoir selon l'une quelconque des revendications précédentes, **caractérisé en ce que** le fond (44) du système de buses (39) a une forme concave et les parois latérales (45, 46) du côté amont et du côté aval, s'étendent vers l'extérieur en s'écartant l'une de l'autre.

7. Semoir selon l'une quelconque des revendications précédentes, **caractérisé en ce que** chaque unité de distribution (14) est munie d'un réservoir auxiliaire (18) positionné entre le canal d'entrée de produit (60) et le dispositif de dosage de produit (20).

8. Semoir selon l'une quelconque des revendications précédentes, **caractérisé en ce qu'**il comporte un répartiteur d'air (34), qui est relié en amont, par voie pneumatique via la conduite d'admission d'air (38), à la pompe à air (32), chacune des conduites d'admission d'air (38) étant reliées par voie pneumatique au répartiteur d'air (34).

9. Semoir selon la revendication 8, **caractérisé en ce que** le répartiteur d'air (34) est formé par une partie creuse d'un bâti (12) portant la trémie principale (30).

10. Semoir selon l'une quelconque des revendications précédentes, **caractérisé en ce que** le système de buses (39) comporte une vanne de nettoyage (48) qui est agencée en dessous des canaux d'entrée d'air (41) des conduites d'admission d'air (38) et des canaux de sortie de produit (43) des conduites d'alimentation en produit (42).

11. Semoir selon l'une quelconque des revendications précédentes, **caractérisé en ce que** les canaux d'entrée d'air (41) des conduites d'admission d'air (38) comportent des inserts (62) qui sont munis d'un déflecteur (64), par lequel une partie du flux d'air est déviée vers le bas en direction du fond (44) du système de buses (39) afin de faire tourbillonner le produit disposé sur le fond (44) du système de buses (39).

12. Semoir selon l'une quelconque des revendications précédentes, **caractérisé en ce que** les obturateurs (58) sont munis d'un élément (68), qui comporte un fond (70) restrictif en vue de limiter les quantités de produit exposées au flux d'air circulant entre les canaux d'entrée d'air (41) des conduites d'admission d'air (38) et les canaux de sortie de produit (43) des conduites d'alimentation en produit (42).

13. Semoir selon la revendication 12, **caractérisé en ce que** l'élément (68) est un élément enfichable sous la forme d'un élément à encliquetage.

14. Semoir selon l'une quelconque des revendications précédentes, **caractérisé en ce qu'**un mécanisme de brassage (80) est monté dans le système de buses (39) afin de brasser le produit contenu dans le système de buses (39).

15. Semoir selon la revendication 14, **caractérisé en ce que** le mécanisme de brassage (80) comporte plusieurs doigts (84), qui s'étendent dans les espaces libres formés entres les obturateurs (58) voisins.

16. Semoir selon la revendication 14 ou 15, **caractérisé en ce que** le mécanisme de brassage (80) comporte une barre transversale (82), agencée au-dessus des obturateurs (58), la barre transversale (82) comportant plusieurs doigts (84), qui s'étendent radialement vers l'extérieur à partir de la barre (82) orientée transversalement.

17. Semoir selon la revendication 15 ou 16, **caractérisé en ce que** les doigts (84) sur la barre (82) transversale sont orientés dans le sens transversal les uns par rapport aux autres.

18. Semoir selon l'une quelconque des revendications 15 à 17, **caractérisé en ce que** la barre transversale (82) peut tourner en va-et-vient, de telle sorte que les doigts (84) brassent le produit contenu dans le système de buses (39).

19. Semoir selon l'une quelconque des revendications 14 à 18, **caractérisé en ce que** la barre transversale (82) peut tourner en va-et-vient en suivant un arc de cercle de 103 degrés.

20. Semoir selon la revendication 19, **caractérisé en ce que** le centre de l'arc de cercle couvrant un angle de 103 degrés représente la position de point mort inférieur par rapport au système de buses (39).
